# EUROPEAN PATENT APPLICATION

(11) **EP 3 009 182 A1**
(43) Date of publication of application: **20.04.2016**
(21) Application number: 15186831.2
(22) Date of filing: 25.09.2015
(51) Int. Cl.: B01D 67/00, B01D 69/02, B01D 69/06, B01D 71/02

(54) **METHOD FOR PRODUCING A POROUS CERAMIC BODY AND A POROUS CERAMIC BODY OBTAINED FROM SAID METHOD**

(30) Priority: 09.10.2014 DK 201400581
(71) Applicant: Cembrane A/S, 3540 Lynge (DK)
(72) Inventor: Andreassen, Lasse, 3230 Græsted (DK)
(74) Representative: Larsen & Birkeholm A/S

(57) **Abstract**

The present invention relates to a method for the production of a porous ceramic body comprising the following steps: selecting a first ceramic powder with a first mean grain size; selecting a second ceramic powder with a second mean grain size; selecting a third ceramic powder with a third mean grain size; mixing the first ceramic powder, the second ceramic powder and the third ceramic powder to produce a powder composition comprising at least a trimodal grain size distribution; coating a porous support with the powder composition providing a coated ceramic body; and heating the coated ceramic body to a temperature between 1550-1900°C producing the porous ceramic body.

## Description

### Technical field of the invention

The present invention relates to the production of a porous ceramic body. Preferably, the present invention relates to the production of a porous ceramic body comprising silicon carbide from a ceramic composition comprising a trimodal grain size distribution. The porous ceramic body obtained from the present invention may preferably be used in water purification.

### Background of the invention

Membrane filters has been used for years in many different industries as a tool for fractionating materials in a liquid mixture. The membrane filter comprise porous materials designed to retain some constituents (the retentate) from the liquid mixture and allowing other constituents of the liquid mixture to pass (the permeate).

In addition to these industrial applications of membrane filters the world is also struggling to supply the ever increasing demand for clean water. It is estimated that 1.1 Billion people lack access to safe drinking water and there are an increasing demand from industry and farmers to fresh water. Increased pollution and increasing stress on the world's water resources is driving the demand for new and efficient technologies such as membrane technology to provide sufficient amount of water.

Hence, water treatment will remain a top priority and membrane filters are essential in expansions and upgrades of water treatment infrastructures. Higher environmental standards and regulations in many countries around the world and high population growth, particularly in water-stressed areas, further increase the demand for water purification systems.

Membrane filters are designed with a specific pore size and thus can be designed with any desired pore size depending on the specific application of the filter. When used in fractionating the constituents in a liquid mixture, constituents having a grain size larger than the pore size of the membrane filter are retained by the filter and ends up in the retentate fraction. The constituents in the liquid mixture having a size smaller than the pore size of the membrane filter are allowed to run through the membrane filter and ends up in the permeate fraction.

The market of porous membranes is vastly dominated by the well-known and low-cost polymer membranes, even though ceramic membranes are more robust chemically and mechanically, offer longer life, and provide a more stable operation. One downside to ceramic membranes is the higher price, which is only partly absorbed by the higher throughput pr. square meter membrane surface. Nonetheless, as the price of producing ceramic membranes comes down, the benefits are becoming more and more evident.

US 7,699,903 describes a method for producing a ceramic membrane comprising silicon carbide (SiC) which involves powder mixture having a bimodal grain distribution of a first ceramic grain powder having a significantly large grain size and a second ceramic grain powder which dissolve during heating and participate in attaching the larger grains together. This process is repeated several times with decreasing particle sizes of the first ceramic grain powder to provide the final membrane.

One of problems with the method described in US 7,699,903 is the layer-wise repetition of applying, heating and cooling of the ceramic powders to provide the final membrane which makes the process troublesome, time consuming and costly.

Hence, an improved method for producing a porous membrane filter would be advantageous, and in particular a more simple and efficient method which is faster and cheaper would be advantageous.

### Summary of the invention

Thus, an object of the present invention relates to a more simple method for producing a porous ceramic body, such as a porous filter membrane, which method is faster, inexpensive and more environmental friendly.

In particular, it is an object of the present invention to provide a method and a porous ceramic body that solves the above mentioned problems of the prior art.

Thus, one aspect of the invention relates to a method for the production of a porous ceramic body comprising the following steps:
- selecting a first ceramic powder with a first mean grain size;
- selecting a second ceramic powder with a second mean grain size;
- selecting a third ceramic powder with a third mean grain size;
- mixing the first ceramic powder, the second ceramic powder and the third ceramic powder to produce a powder composition comprising at least a trimodal grain size distribution;
- coating a porous support with the powder composition providing a coated ceramic body; and
- heating the coated ceramic body to a temperature between 1550-1900°C producing the porous ceramic body.

Another aspect of the present invention relates to a method for the production of a porous ceramic body comprising the following steps:
- selecting at least
   ∘ a first ceramic powder with a first mean grain size; and
   ∘ a second ceramic powder with a second mean grain size;
- mixing at least the first ceramic powder and the second ceramic powder to produce a powder composition comprising at least a bimodal grain size distribution;
- coating a porous support with the powder composition providing a coated ceramic body;
- heating the coated ceramic body to a temperature between 1550-1900°C producing the porous ceramic body, and
wherein the mean gran size of the first ceramic powder is at most 10 times larger than the mean gran size of the second ceramic powder.

Yet another aspect of the present invention relates to a porous ceramic body obtainable by a method according to the present invention.

Still another aspect of the present invention relates to a membrane filter unit comprising a porous ceramic body according the present invention.

An even further aspect of the present invention relates to a submersible system comprising a porous ceramic body according to the present invention and/or a membrane filter unit according to the present invention.

Yet another aspect of the present invention relates to the use of a porous ceramic body according to the present invention and/or a membrane filter unit according to the present invention and/or the submersible system according to the present invention for water purification.

### Description of the figures

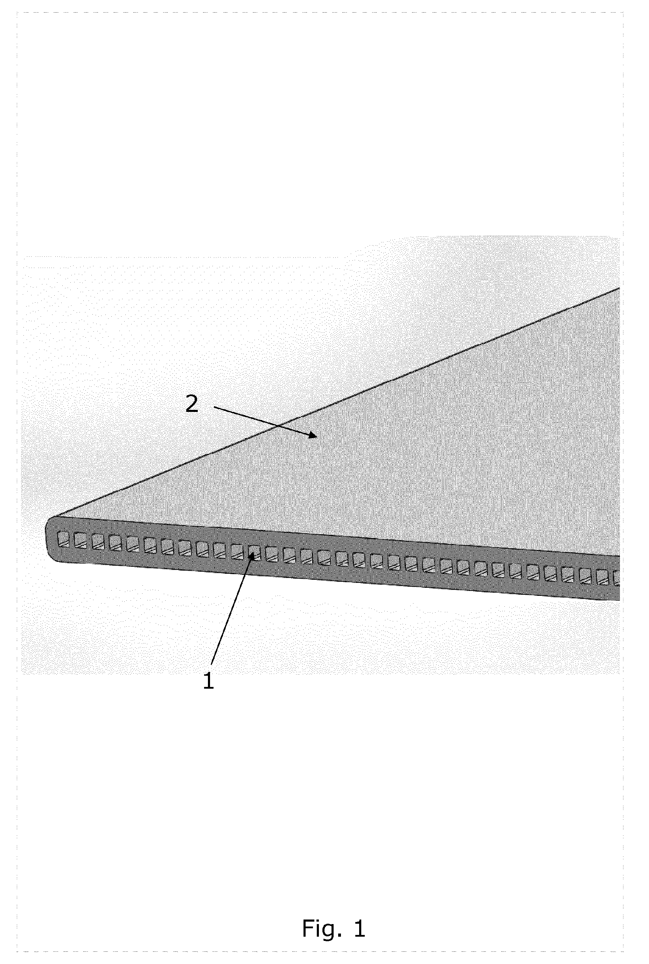

Figure 1 shows a flat sheet membrane for outside-in filtration according to the present invention. The flat sheet membrane includes one or more cavities (1) surrounded by one or more sides coated with the powder composition (2) forming the porous ceramic body, the flat sheet membrane. In figure 1 only one coated side is visible and one or more of the other sides not visible can be coated with the powder composition too. Additionally the flat sheet membrane includes at least one exit connected to the one or more cavities for extracting the permeate of the water to be purified.

The present invention will now be described in more detail in the following.

### Detailed description of the invention

The term "a porous ceramic body" relates to various forms and shapes of a porous ceramic element. The porous ceramic element or the porous ceramic body may also be applicable in various applications wherein fractionation of at least one constituent from a liquid composition is desired. In the present invention, the liquid composition is water and even more preferably, the water may be selected from the group consisting of ground water, surface water (such as, river water, lake water, wetland water, or ocean water), produced water, process water and waste water.

In the present context, the term "produced water" relates to the oil industry to describe water that may be produced as a byproduct along with the oil and gas. Oil and gas reservoirs often have water as well as hydrocarbons, sometimes in a zone that lies under the hydrocarbons, and sometimes in the same zone with the oil and gas. Oil wells sometimes produce large volumes of water with the oil, while gas wells tend to produce water in smaller proportion.

Furthermore, in the present context the tem "process water" relates to treated water to be fed into wide range of equipments and devices such as boilers, heat exchangers, engines, and/or for chemicals dilution and in chemical processes. Process water should typically have a conductivity ranging from 0.1 to 50 µS/cm, with little to no hardness to avoid scaling in heating system. Oxygen and carbon dioxide should be removed to prevent corrosion. Tap water or fresh groundwater are the most widely used source of water to produce process water.

In an embodiment of the present invention, waste water may be obtained from metal processing, textile production, laundry, the oil industry, the chemical industry, or the food industry.

Since, water purification processes like this relates to enormous volumes it is desirable to have a system which is chemically and mechanically stable and at the same time which is cheaper, faster and simpler to produce compared to traditionally produced porous ceramic bodies.

Thus, one aspect of the present invention relates to a method for the production of a porous ceramic body comprising the following steps:
- Selecting a first ceramic powder with a first mean grain size;
- Selecting a second ceramic powder with a second mean grain size;
- Selecting a third ceramic powder with a third mean grain size;
- mixing the first ceramic powder, the second ceramic powder and the third ceramic powder to produce a powder composition comprising at least a trimodal grain size distribution;
- coating a porous support with the powder composition providing a coated ceramic body; and
- heating the coated ceramic body to a temperature between 1550-1900°C producing the porous ceramic body.

In the present context, the term "selecting" relates to the action of deciding the proper ceramic powders in order to obtain the pore size of the ceramic porous body as desired. The pore size is dependent on various parameters, in particular the mean grain size of the selected ceramic powders and the heating time.

Another aspect of the present invention relates to a method for the production of a porous ceramic body comprising the following steps:
- Selecting at least
   ∘ a first ceramic powder with a first mean grain size; and
   ∘ a second ceramic powder with a second mean grain size;
- mixing at least the first ceramic powder and the second ceramic powder to produce a powder composition comprising at least a bimodal grain size distribution;
- coating a porous support with the powder composition providing a coated ceramic body;
- heating the coated ceramic body to a temperature between 1550-1900°C producing the porous ceramic body, and
wherein the mean gran size of the first ceramic powder is at most 10 times larger than the mean gran size of the second ceramic powder.

As mentioned the costs for producing the porous ceramic body are high and considered a challenge for the ceramic filter membrane industry in the competition with the polymeric membranes. In particular heating and cooling of the coated ceramic body is cost and time consuming and adds significantly to the total costs of providing the porous ceramic bodies. Therefore, there is an enormous interest in reducing the production costs and the time for producing the porous ceramic bodies. In an embodiment of the present invention, the heating temperature is in the range of 1600-1800°C, such as in the range of 1650-1750°C, such as about 1700°C.

When only two different ceramic powders having two different mean grain sizes the production of the porous ceramic body may further include selection of at least a third ceramic powder with a third mean grain size, providing, when mixed, a powder composition comprising at least a trimodal grain size distribution.

In an embodiment of the present invention the, production of the porous ceramic body further includes selection of a fourth ceramic powder with a fourth mean grain size, providing, when mixed, a powder composition comprising at least a tetramodal grain size distribution.

In yet an embodiment of the present invention, the production of the porous ceramic body further includes selection of a fifth ceramic powder with a fifth mean grain size, providing, when mixed, a powder composition comprising at least a pentamodal grain size distribution.

Irrespective of the grain size distribution is a trimodal grain size distribution, a tetramodal grain size distribution or a pentamodal grain size distribution the third mean grain size will have the smallest mean grain size.

In the present context, the term "bimodal grain size distribution" relates to a continuous distribution of two ceramic powders with two different grain size distributions. These appear as two distinct peaks each having a local maxima. The same applies for the "trimodal grain size distribution", the "tetramodal grain size distribution" and the "pentamodal grain size distribution" relating to a continuous distribution of 3, 4, or 5 ceramic powders with 3, 4, or 5 different grain size distributions, respectively. These appear as 3, 4, or 5 distinct peaks each having a local maxima.

In an embodiment of the present invention, the ceramic powders present are present in the powder composition in various concentrations. When at least two ceramic powders are present in unequal amounts the larger amount is known as the major ceramic powder and the other as the minor ceramic powder.

It is preferred to have at least two different ceramic powders, such as at least 3 different ceramic powders, e.g. at least 4 different ceramic powders, such as at least 5 different ceramic powders, each having different mean grain sizes in order to provide a porous ceramic body having a homogenous and uniform grain size distribution and pore size distribution. Furthermore, the process of the present invention may be suitable for providing a porous ceramic body having a very narrow pore size.

In an embodiment of the present invention the mean gran size of the first ceramic powder is at most 10 times larger than the mean gran size of the second ceramic powder, such as at most 9 times larger, e.g. at most 8 times larger, such as at most 7 times larger, e.g. at most 6 times larger, such as at most 5 times larger, e.g. at most 4 times larger, such as at most 3 times larger, e.g. at most 2 times larger.

In powder compositions comprising 3, 4 or 5 different ceramic powders each having different mean grain sizes the mean grain size of the 3^{rd} ceramic powder is always the smallest.

In an embodiment of the present invention the second mean grain size is at least 2 times larger than the third mean gran size, such as at least 3 times larger, e.g. at least 4 times larger, such as at least 6 times larger, e.g. at least 8 times larger, such as at least 10 times larger.

In powder compositions comprising four and/or five ceramic powders compositions the fourth and/or the fifth mean grain sizes are larger than the second mean grain size and the mean grain size of the fourth ceramic powder is different from the mean grain size of the fifth ceramic powder.

In an embodiment of the present invention, the mean grain size of the first ceramic powder is in the range of 1-25 µm and the mean grain size of the second ceramic powder is in the range of 0.5-20 µm. In yet an embodiment of the present invention the third mean grain size is in the range of 0.05-0.5 µm, the fourth mean grain size is in the range of 1-24 µm and/or the fourth mean grain size is in the range of 1-24 µm

In a further embodiment of the present invention the powder composition does not comprises 40% F600 (mean grain size 9 µm); 30% F1200 (mean grain size 3 µm) and 20% JIS 9000 (mean grain size 1 µm) and JIS20000.

In a preferred embodiment of the present invention, the first ceramic powder has a first mean grain size in the range of 2-4 µm; the second ceramic powder has a second mean grain size in the range of 0.5-0.9 µm; and the third ceramic powder has a third mean grain size in the range of 0.2-0.4 µm.

Depending on the application and the structure of the final porous ceramic body, the ceramic powder used may be obtained from different sources and even be based in a combination of different ceramic sources.

In an embodiment of the present invention the first, the second, the third (when present), the fourth (when present) and the fifth (when present) ceramic powders are selected independently and is selected from the group consisting of aluminium oxide, silicon, silicon dioxide, titanium, titanium oxide, zirconium, zirconium oxide and mixtures hereof. Preferably, the first, the second, the third (when present), the fourth (when present) and the fifth (when present) ceramic powders may be silicon, even more preferably, silicon carbide (SiC).

The most preferred ceramic powder may be wherein the ceramic powder comprises alpha-SiC.

During production of the porous ceramic body excessive amounts of the ceramic powder having the smallest mean grain size, e.g. the third ceramic powder, may result in a hindrance of the larger particles to direct contact which leads to higher porosity with larger pores. If insufficient amounts of the ceramic powder having the smallest mean grain size, e.g. the third ceramic powder, have been added, the result may be that the following recrystallization may be impaired which may lead to improper attachment.

In an embodiment of the present invention the mixing ratio between the first and the second and the fourth (when present) and the fifth (when present) ceramic powders relative to the third powder is 6:1 to 1:1 on a weight:weight basis.

In addition to the ceramic powders, the powder composition may comprise several other components in order to favour preparation of the porous ceramic body. In an embodiment of the present invention the powder composition further comprises one or more organic binders and/or one or more sintering agents and/or one or more de-foaming agents and/or one or more de-flocculating agents.

In the present contest, the term "organic binder" relates to a component added to the powder composition and/or the slurry comprising the powder composition which assist and/or favour attachment of the powder composition and/or the slurry comprising the powder composition to the support prior to heating. In an embodiment of the present invention, the one or more organic binder may be polyvinyl alcohol, methyl-cellulose, methyl-cellulose derivatives, ethyl-cellulose, ethyl-cellulose derivatives, methyl-cellulose ether, methyl-cellulose ether derivatives, ethyl-cellulose ether, ethyl-cellulose ether derivatives or any combination hereof.

An aspect of the present invention relates to a powder composition a slurry comprising at least a first ceramic powder with a first mean grain size, a second ceramic powder with a second mean grain size and a combination of organic binders. Preferably the combination of organic binders may be the combination of two or more of polyvinyl alcohol, methyl-cellulose, methyl-cellulose derivatives, ethyl-cellulose, ethyl-cellulose derivatives, methyl-cellulose ether, methyl-cellulose ether derivatives, ethyl-cellulose ether, ethyl-cellulose ether derivatives. In another embodiment of the present invention the combination of two or more binders involves the combination of polyvinyl alcohol with one or more of methyl-cellulose, methyl-cellulose derivatives, ethyl-cellulose, ethyl-cellulose derivatives, methyl-cellulose ether, methyl-cellulose ether derivatives, ethyl-cellulose ether, ethyl-cellulose ether derivatives.In the context of the present invention, the term "sintering agent" relates to agents capable of catalysing the binding process during heating wherein the larger ceramic grains are tied together. This catalytic effect is provided by formation of a small melt phase of the sintering agent. In an embodiment of the present invention the one or more sintering agent is gamma-alumina oxide, boron carbide, ytria oxide, carbon or a combination hereof.

In the present context, the term "de-foaming agent" relates to a component capable of avoid foaming of the slurry comprising the powder composition when subjected to heating, which may result in cracks in the porous ceramic body provided.

In the context of the present invention the term "de-flocculating agent" relates to a component capable of keeping the solids of the slorry comprising the powder composition in suspension and to ensure a homogenous distribution of the grains. In an embodiment of the present invention the de-flocculating agent" may be selected from the group consisting of glycol, silicones, insoluble oils and combinations hereof.

In another embodiment of the present invention the powder composition may be mixed with an aqueous solution, preferable water and/or an alcohol, to provide a slurry. The slurry provided may subsequently be used in order to coating a porous support with the slurry comprising the powder composition.

In an embodiment of the present invention the porous support is in the form of a plate. The plate may have an internal cavity coated on at least one side of the porous ceramic body. Preferably, the plate is coated on two sides with the porous ceramic body, even more preferably, the plate is coated on all sides with the porous ceramic body.

It may be important to ensure sufficient distribution of the powder composition to during coating of the porous support and hence obtain an even and homogenous distribution of the pore size and porosity of the porous ceramic body. In an embodiment of the present invention the plate is coated with the slurry by dipping the plate into the slurry, and/or pouring or spraying the slurry onto the plate.

When the powder composition has been coated on the porous support the coated ceramic body may be subjected to a drying step prior to heating. In an embodiment of the present invention the drying step involves subjecting the coated ceramic body to warm and/or dry air. Preferably, the warm air has a temperature in the range of 50-100°C.

After an optional step of drying as mentioned above, and before heating, the organic binder, if added to the powder composition may be removed. In an embodiment of the present invention the organic binder may be removed prior to heating by increasing the temperature to 400-500°C, preferably in the presence of an inert gas, such as argon, helium or nitrogen.

When subjecting the organic binder to a temperature in the range of 400-500°C the organic binder may be converted into carbon. This carbon may subsequently be used as a sintering agent during heating.

In an embodiment of the present invention, the heating is performed in the presence of an inert gas, such as argon, helium or nitrogen.

In order to increase the safety when heating the coated ceramic body, oxygen may be evacuated from the furnace before heating the coated ceramic body. In alternative to oxygen an inert gas, such as argon, helium or nitrogen may be introduced into the furnace. Preferably, the oxygen is evacuated by vacuum.

In an embodiment of the present invention the heating time is 12 hours or less, such as 10 hours or less, e.g. 8 hours or less, such as 6 hours or less.

The porous support where the powder composition has been coated on to may be of the same of a different ceramic source as the porous ceramic body. Preferably, the ceramic source is selected from the group consisting of aluminium, aluminium oxide, silicon, silicon oxide, titanium, titanium oxide, zirconium, zirconium oxide and mixtures hereof.

In a preferred embodiment of the present invention, the porous support is a plate, preferably a silicon carbide (SiC) plate.

In yet an embodiment of the present invention the plate is a honeycomb plate, preferably, an extruded honeycomb plate. The plate may preferably have a pore size in the range of 1-10 µm, e.g. in the range of 1.5-8 µm, such as in the range of 2-5 µm, e.g. in the range of 2.5-4 µm, e.g. about 3 µm. Preferably, the plate may have a porosity in the range of 25-75%, e.g. in the range of 30-65%, such as in the of 35-55%, e.g. in the range of 40-45%.

Depending on e.g. the mean grain size of the ceramic powders in the powder composition, the exact heating time and temperature may be determined in a case by case basis. In an embodiment of the present invention the heating time and the temperature for providing a given porous ceramic body is when the fine ceramic powder, preferably the third ceramic powder, has disappeared and no, or substantially no giant grain growth has occurred When the coated ceramic body has been sufficiently heated for a period of time and at a temperature in order to provide a uniform and homogeneously distributed porosity with continuous roughly equally sized pores in a three-dimensional pore network.

In an embodiment of the present invention the porous ceramic body has a pore size of 5 µm or less, such as 3 µm or less, e.g. 1 µm or less, such as 0.75 µm or less, e.g. 0.5 µm or less, such as 0.3 µm or less, e.g. 0.1 µm or less, such as 0.075 µm or less, e.g. 0.05 µm or less.

The pore size of a membrane or porous ceramic body may be determined by determining the amount of an undesired material that may be found in the permeate during operation of the membrane or the porous ceramic body. The allowable limit depend on the type of unwanted material determined. E.g. for bacterial, as the undesirable material, the requirements are high and the limit may be less than 0.001% in the run through fraction, whereas for simple un-harmful minerals the limit may be less strict and be about less than 1% in the run through. Thus, the percentage stated in respect of limits for undesirable material is given relative to the amount of the undesirable material present in the feed material (e.g. the water run through the membrane).

In an embodiment of the present invention the amount of undesirable material present in the retentate obtained from the porous ceramic body of the present invention is less than 1%, such as less than 0.5%, e.g. less than 0.1%, such as less than 0.05%, e.g. less than 0.01%, such as less than 0.005%, e.g. less than 0.001%, such as less than 0.0005%. The types of undesirable material are well known for the skilled person.

In an embodiment of the present invention, the porous ceramic body is in a substantially completely crystalline form. In another embodiment of the present invention, the porous ceramic body is substantially free of melt phase.

The porous support may preferably have a pore size and/or a porosity which is significantly larger than the pore size and/or the porosity of the porous ceramic body. In an embodiment of the present invention the porosity and/or a porosity is at least 5 times larger than the pore size and/or the porosity of the porous ceramic body, such as at least 10 times larger, e.g. at least 25 times larger, such as at least 50 times larger, e.g. at least 75 times larger.

In another embodiment of the present invention the porous ceramic body comprises a porous ceramic backbone, preferably silicon carbide (SiC), coated with a porous ceramic body, preferably silicon carbide (SiC).

In yet an embodiment of the present invention, the porous ceramic body may have a pore size of 5 µm or less, such as 3 µm or less, e.g. 1 µm or less, such as 0.75 µm or less, e.g. 0.5 µm or less, such as 0.3 µm or less, e.g. 0.1 µm or less, such as 0.075 µm or less, e.g. 0.05 µm or less.

In a further embodiment of the present invention, the porous ceramic body may have a porosity in the range of 10-65%, such as 15-55%, e.g. in the range of 20-50%, such as in the range of 25-45%, such as in the range of 30-45%, e.g. in the range of 35-40%.

The porous ceramic body can be used for different purposes such as a cross-flow membrane or a tube membrane or a flat sheet membrane. In respect of the tube membrane or the flat sheet membrane water to be purified may run on either the inside of he membrane and excreting the permeate to the outside or the water to be purified may run on the outside and excreting the permeate to the inside.

In a preferred embodiment of the present invention, the porous ceramic body is flat sheet membrane and/or the porous ceramic body is an outside-in filtration ceramic membrane.

Prior art methods are produced by a layer-wide repeating of layer of ceramic powders of different particle sizes. This process also involves repeating heating and cooling processes which make it very time consuming, complex and costly.

In an embodiment of the present invention the method is a one-step process. Preferably, the one-step process does not involve a layer-wide repeating of various ceramic powders with decreasing mean grain sizes.

The simple process according to the present invention is faster and more cost efficient as the porous ceramic body may be provided by a single heating step.

In an embodiment of the present invention, the porous ceramic body and/or the membrane filter according to the present invention may be an ultrafiltration unit, a microfiltration unit or a nanofiltration unit.

As mentioned above a further aspect of the present invention relates to a submersible system comprising a porous ceramic body according to the present invention and/or a membrane filter unit according to the present invention.

Preferably the submersible system according to the present invention, further comprising a vacuum pump. Said vacuum pump may be used for creating a negative pressure forcing the water to be purified to enter the filter and/or the porous ceramic body from the outside allowing the permeate to exit the filter and/or the porous ceramic body from the inside, e.g. as illustrated in figure 1.

Alternatively, the submersible system may be submerged into a pressurised tank. In such pressurised tank a pressure is applied to the water tank forcing the water to enter the water to be purified to enter the filter and/or the porous ceramic body from the outside allowing the permeate to exit the filter and/or the porous ceramic body from the inside.

In an embodiment of the present invention, the submersible system comprises two or more porous ceramic bodies according to anyone of claims 31-36, such as 3 or more, e.g. 4 or more, such as 5 or more, e.g. 7 or more, such as 10 or more, e.g. 15 or more, such as 20 or more, e.g. 30 or more.

The porous ceramic body, the membrane filter, and/or the submersible system according the present invention may be suitable for water purification.

It should be noted that embodiments and features described in the context of one of the aspects of the present invention also apply to the other aspects of the invention.

### References

US 7,699,903

## Claims

1. A method for the production of a porous ceramic body comprising the following steps:
- Selecting a first ceramic powder with a first mean grain size;
- Selecting a second ceramic powder with a second mean grain size;
- Selecting a third ceramic powder with a third mean grain size;
- mixing the first ceramic powder, the second ceramic powder and the third ceramic powder to produce a powder composition comprising at least a trimodal grain size distribution;
- coating a porous support with the powder composition providing a coated ceramic body; and
- heating the coated ceramic body to a temperature between 1550-1900°C producing the porous ceramic body.

2. A method for the production of a porous ceramic body comprising the following steps:
- Selecting at least
∘ a first ceramic powder with a first mean grain size; and
∘ a second ceramic powder with a second mean grain size;
- mixing at least the first ceramic powder and the second ceramic powder to produce a powder composition comprising at least a bimodal grain size distribution;
- coating a porous support with the powder composition providing a coated ceramic body;
- heating the coated ceramic body to a temperature between 1550-1900°C producing the porous ceramic body, and
wherein the mean gran size of the first ceramic powder is at most 10 times larger than the mean gran size of the second ceramic powder.

3. The method according to claim 2, wherein the production of the porous ceramic body further includes selection of a third ceramic powder with a third mean grain size, providing, when mixed, a powder composition comprising at least a trimodal grain size distribution.

4. The method according to anyone of the preceding claims, wherein the first, the second, the third (when present), the fourth (when present) and the fifth (when present) ceramic powders are silicon, preferably silicon carbide (SiC).

5. The method according to anyone of claims 1, 3 and 4, wherein the first ceramic powder has a first mean grain size in the range of 2-4 µm; the second ceramic powder has a second mean grain size in the range of 0.5-0.9 µm; and the third ceramic powder has a third mean grain size in the range of 0.2-0.4 µm.

6. The method according to anyone of the previous claims, wherein the porous support is a plate coated with the slurry by dipping the plate into the slurry, and/or pouring or spraying the slurry onto the plate.

7. A porous ceramic body obtainable by a method according to anyone of claims 1-6.

8. The porous ceramic body according to claim 7, wherein porous ceramic body is flat sheet membrane.

9. The porous ceramic body according to anyone of claims 7-8, wherein porous ceramic body has a pore size of 5 µm or less, such as 3 µm or less, e.g. 1 µm or less, such as 0.75 µm or less, e.g. 0.5 µm or less, such as 0.3 µm or less, e.g. 0.1 µm or less, such as 0.075 µm or less, e.g. 0.05 µm or less.

10. A submersible system comprising a porous ceramic body according to anyone of claims 7-9.

11. A powder composition comprising at least a first ceramic powder with a first mean grain size, a second ceramic powder with a second mean grain size and a combination of two or more organic binders.
